# EUROPÄISCHE PATENTSCHRIFT

(11) **EP 0 402 832 B1**
(45) Veröffentlichungstag und Bekanntmachung des Hinweises auf die Patenterteilung: **25.08.1993**
(21) Anmeldenummer: 90111010.6
(22) Anmeldetag: 11.06.1990
(51) Int. Cl.: B23K 26/00

(54) **Verfahren zur Führung des Temperaturverlaufes an Lötstellen beim Laserlöten**
Method of guiding the temperature course at soldering points by laser soldering
Procédé pour suivre la variation de température à des points de soudage lors du soudage par laser

(30) Priorität: 15.06.1989 DE 3919587
(43) Veröffentlichungstag der Anmeldung: 19.12.1990
(73) Patentinhaber: Siemens Nixdorf Informationssysteme Aktiengesellschaft, 33102 Paderborn (DE)
(72) Erfinder: Diegelmann, Michael, Dr., D-8000 München 71 (DE); Koch, Volker-Ekkehardt, Dr., D-8024 Oberhaching (DE); Deimann, Rolf, Dipl.-Ing., D-8000 München 80 (DE); Stark, Wolfgang, Dipl.-Ing., D-8000 München 40 (DE)
(74) Vertreter: Fuchs, Franz-Josef, Dr.-Ing.

(56) Entgegenhaltungen:
- EP-A- 0 064 352
- WO-A-87/05243
- DE-A- 3 705 182
- US-A- 4 818 841

## Beschreibung

Die Erfindung betrifft ein Verfahren zur Führung des Temperaturverlaufes an Lötstellen beim Laserlöten mittels der Erfassung des Aufschmelzzeitpunktes des Lotes mit bekannter Schmelztemperatur. Ein solches Verfahren ist aus der DE-A-3701013 bekannt.

Ein grundsätzliches Problem beim Laserlöten ist die Kontrolle der Energieeinkopplung und der Aufheizung von Lötstellen auf eine bestimmte Temperatur. Infolge starker Streuungen des Absorptionskoeffizienten von Lötstelle zu Lötstelle, unterschiedlicher Lotvoluminia und unterschiedlicher Oberflächenbeschaffenheiten ist beim Laserlöten die bloße Vorgabe der Laserleistung in den meisten Fällen nicht ausreichend. Derartige Verfahrensweisen führen in Extremfällen zu kalten Lötstellen oder zu Zerstörungen am Werkstück, auf dem sich die Lötstellen befinden.

Zur Sicherstellung einer gleichbleibenden Qualität von Laserlötverbindungen müssen vor allem die durch unterschiedlichen Oxidationsgrad der Oberfläche oder durch unterschiedliche Verschmutzung bedingten Unterschiede im Absorptionsvermögen durch individuelle Anpassung an jedes einzelne Werkstück bzw. jede einzelne Lötstelle ausgeglichen werden.

Meßverfahren, die im wesentlichen durch Wärmeleitung die aktuelle Lötstellentemperatur messen, sind für Laserlötverfahren zu träge.

In der DE-PS 37 01 013 wird ein Verfahren zur Temperaturbestimmung unter Einsatz eines Infrarotstrahlungspyrometers beschrieben. Die Infrarotemission der Lötstelle wird über das Infrarotstrahlungspyrometer aufgenommen und als relatives Maß für die Lötstellentemperatur ausgewertet. Hierbei wird das Phänomen ausgenutzt, daß bei Erwärmung der Lötstelle mittels konstanter Laserleistung der weitgehend zeitlineare Anstieg der Temperatur an der Lötstelle beim Erreichen des Lotschmelzpunktes einen Haltepunkt aufweist. Die Zeit des Aufschmelzens entspricht der Länge des Haltepunktes und ist die Zeit, die erforderlich ist, um dem Lot die latente Wärme, die Schmelzwärme, zuzuführen. Diese Diskontinuität im zeitlichen Anstieg des der Lötstellentemperatur entsprechenden Infrarotsignales wird in der erwähnten Patentschrift als Kennzeichen für das Erreichen der Schmelztemperatur des Lotes ausgewertet. Eine absolute Temperaturmessung geschieht hierbei nicht.
Dieses Verfahren weist meßtechnische Unsicherheiten auf. Die Reproduzierbarkeit des gemessenen Infrarotsignales ist im wesentlichen nur dann gegeben, wenn sämtliche auf einem Werkstück befindlichen Lötstellen annähernd gleich aufgebaut und gleich groß sind. Zudem müssen die Lötstellen eine bestimmte Mindestgröße aufweisen, da sonst der Haltepunkt im Temperatur-Zeit-Verlauf beim Aufschmelzen des Lotes nicht genügend ausgeprägt ist und nicht zuverlässig detektiert werden kann.

Der Erfindung liegt die Aufgabe zugrunde, ein Verfahren zum Laserlöten bereitzustellen, daß für viele unterschiedlich gestaltete Lötstellen gleichmäßig gute und reproduzierbare Laserlötverbindungen ermöglicht, ohne daß die unterschiedlichen Lotvolumina und die unterschiedlichen Oberflächenbeschaffenheiten das Lötverfahren nachteilig beeinflussen.

Die Lösung dieser Aufgabe wird durch die Merkmale des Ansprüches 1 wiedergegeben.

Der Erfindung liegt die Erkenntnis zugrunde, daß mittels der Bestrahlung der Lötstelle mit intensitätsmoduliertem Laserlicht in der Lötstelle ein Ultraschallsignal erzeugt wird, das über einen geeigneten am Werkstück oder an dessen Halterung angekoppelten Aufnehmer erfaßbar ist. Das intensitätsmodulierte Laserlicht erzeugt in der festen Substanz ein instationäres Temperaturfeld, durch das Scherspannungen zwischen den unterschiedlich heißen Schichten erzeugt werden und gleichzeitig Ultraschall, überwiegend als Transversalwelle, emittiert wird. Wird das Lot aufgeschmolzen und können somit keine Scherspannungen mehr erzeugt bzw. weitergeleitet werden, so fällt die Amplitude des Ultraschallsignales rapide ab. Durch diesen Abfall kann der Zeitpunkt, zu dem das Lot aufschmilzt, exakt festgestellt werden. Nachteilige Einflüsse, wie unterschiedliche Beschaffenheiten von Lotoberflächen, Verschmutzungen oder unterschiedliche Lotvolumina haben keine Auswirkungen.

Eine vorteilhafte Ausgestaltung der Erfindung sieht vor, daß eine bestimmte Arbeitstemperatur an der Lötstelle, die höher, als die Schmelztemperatur des Lotes liegt, durch Nachlieferung einer empirisch festgelegten Energiemenge nach dem Aufschmelzen erreicht wird. Diese Verfahrensweise kann sich auf Erfahrungswerte stützen und benötigt keinen größeren apparativen Aufwand.

Eine weitere Verfeinerung der Temperaturführung des Lotes bis zu einer bestimmten Arbeitstemperatur besteht darin, daß die vom Laser abgegebene Energiemenge bis zum Erreichen des Schmelzpunktes des Lotes ermittelt wird und eine daraus abgeleitete Energiemenge anschließend nachgeliefert wird. Dies kann beispielsweise über eine Verhältnisrechnung geschehen, wobei Erfahrungswerte mit einfließen können. Mit dieser Steuerung ist die Temperaturführung an der Lötstelle bis zum Erreichen einer bestimmten Arbeitstemperatur ohne hohen apparativen Aufwand und für viele Anwendungsfälle ausreichend präzise.

Sollen gleichzeitig mehrere, aufgrund der Beschaffenheit des Werkstückes nicht gegeneinander schallisolierte Lötstellen mittels Laserlicht bearbeitet werden, so kann durch einen oder mehrere am Werkstück oder an dessen Halterung angebrachte Ultraschallsensoren die Ermittlung von einzelnen jeweils zu einer Lötstelle zugehörigen Ultraschallsignalen nicht ohne weiteres durchgeführt werden. Da in den einzelnen Lötstellen die Amplituden der Ultraschallsignale zu unterschiedlichen Zeitpunkten zusammenbrechen, können die einzelnen Aufschmelzzeitpunkte nicht unabhängig voneinander ermittelt werden, sondern es ist lediglich der Zeitpunkt des Aufschmelzens der zuletzt schmelzenden Lötstelle erkennbar. Da die gleichzeitige Bearbeitung von Lötstellen jedoch aus Zeitgründen der sequentiellen Bearbeitung vorzuziehen ist, ist ein Kriterium zur Unterscheidung einzelner jeweils einer Lötstelle zugeordneter Ultraschallsignale notwendig. Hier ist es besonders vorteilhaft, das zur Bearbeitung der einzelnen Lötstellen eingesetzte Laserlicht jeweils mit unterschiedlicher Frequenz in der Intensität zu modulieren. Es hat sich gezeigt, daß die Frequenz der einzelnen Ultraschallsignale der Modulationsfrequenz des jeweils eingestrahlten Laserlichtes entspricht. Somit kann der starke Abfall der Ampitude eines jeden Ultraschallsignales seperat detektiert werden.

Im folgenden wird die Erfindung anhand eines Ausführungsbeispieles näher erläutert:

Es ist selbstverständlich, daß zum Laserlöten eine Lötstelle für den Laserstrahl direkt oder indirekt zugänglich sein muß. Falls die Temperaturführung in Form einer Regelung ausgeführt sein soll, muß zusätzlich das hierfür nötige Infrarot-Strahlungspyrometer auf die Lötstelle gerichtet werden können. Zur Verbesserung der Handhabung ist es zweckmäßig, wenn für den Laserstrahl und das Infrarot-Strahlungspyrometer die gleiche Blickrichtung gewählt wird. Dies ist durch den Einsatz eines wellenlängenabhängigen Teilungsspiegels möglich, wobei dieser Teilungsspiegel etwa unter 45° zur Blickrichtung angewinkelt ist. Dabei wird das seitlich einfallende Laserlicht in die Blickrichtung, also auf der Lötstelle reflektiert, während der Teilungsspiegel für die Infrarotwellenlänge, die von der Lötstelle emittiert und vom Infrarotstrahlungspyrometer detektiert werden soll, durchlässig ist. Der umgekehrte Fall, d.h. ein gerader Durchgang des Laserstrahls und ein seitliches Herausreflektieren der Infrarot-Emission, ist ebenfalls möglich.
Die Aufheizung des Werkstückes erfolgt beispielsweise mit einem gepulsten Nd:YAG-Laser mit folgenden Daten:
- Pulsdauer 0,5 ms
- Pulsenergie 0,02 J
- Pulsfolgefrequenz 3oo Hz
- mittlere Laserleistung 6 W
- Brennfleckdurchmesser 2,5 mm
- Frequenz der Intensitätsmodulation 300 kHz

Ein mit 100 kHz intensitätsmodulierter Dauerstrich - Nd:YAG-Laser wurde ebenfalls mit Erfolg eingesetzt.

Die Ultraschallemission wurde mit Hilfe eines Piezo-Wandlers, der eine Eigenresonanzfrequenz von ca. 300 kHz hatte und an der Werkstückhalterung angekoppelt war, aufgenommen. Das Ausgangssignal wurde durch einen Hochpaß (f_{g} = 100 kHz) gefiltert, anschließend verstärkt und gleichgerichtet. Anhand von Kontrollmessungen, bei denen neben der Aufnahme der Amplitude des Ultraschallsignales über einen am Werkstück angeschweißten Temperaturfühler die aktuelle Lötstellentemperatur erfaßt wurde, ließ sich nachweisen, daß der starke Abfall des Ultraschallsignales gleichzeitig mit dem Aufschmelzen des Lotes geschieht.

Die Versuche wurden an verzinnten Werkstücken aus CuSn6-Streifen mit den Abmessungen von Breite : Dicke : Lotschichtdicke = 3 mm : 0,2 mm : 10 bis 500 µm durchgeführt. Das Licht des Nd:YAG-Lasers mit einer Wellenlänge von 1,06 µm wurde im Infrarot-Strahlungspyrometer durch einen Filter zur Vermeidung von Störlicht herausgefiltert. Die für das Infrarot-Strahlungspyrometer wichtigen Wellenlängen liegen oberhalb von 2 µm. Mit den obengenannten Daten trat das Aufschmelzen des Lotes und somit der starke Abfall der Amplitude des Ultraschallsignales ca. 0,4 sec nach Einschalten des Lasers auf.

Die Einkopplung des Laserlichtes kann entweder direkt in das Lot oder indirekt über eines der miteinander zu verlötenden Teile erfolgen. Im Falle der indirekten Einkopplung der Laserenergie in das Lot, muß der Ultraschall an dem nicht vom Laser bestrahlten Teil abgegriffen werden. Das Einsetzen des Schmelzvorganges wird mittels der Auswertung des Ultraschallsignales erfaßt und die Temperaturführung wird mittels eines Regelkreises durchgeführt, für den das Infrarotstrahlungspyrometer den Ist-Wert liefert. Solange die dem Laserstrahl zugewandte Lotoberfläche oder allgemein der Lotvorrat noch fest ist, führt die Absorption des intensitätsmodulierten Laserlichtes zur Emission und Weiterleitung von Ultraschall mit der Frequenz der Intensitätsmodulation. Dieser Ultraschall breitet sich als Körperschall, bevorzugt als Transversalwelle, im Werkstück aus und wird mit Hilfe eines Ultraschallsensors (Piezo-Wandler) in Wechselspannungssignale umgewandelt. Die Erkennung des Aufschmelzens anhand des Ultraschallsignales ist weitestgehend unabhängig von Schwankungen im Lotvolumen verschiedener hintereinander bearbeiteter Lötstellen oder von Oberflächeneigenschaften der Lötstellen. Somit ist es möglich, das Erreichen der Schmelztemperatur exakt und schnell zu detektieren und oberhalb der Schmelztemperatur die Temperaturführung gemäß einem vorgegebenem Temperatur-Zeit-Verlauf zu regeln. Hierbei kommt eine entsprechend ausgelegte Hardware oder ein Rechner mit entsprechender Software zum Einsatz.

Die Schar von Eichkurven zur Kalibrierung des Infrarot-Strahlungspyrometers wird zuvor von einigen baugleichen nur im Emissionsfaktor ε unterschiedlichen "Masterlötstellen" mit präzisen, aber zeitaufwendigeren Temperaturmeßverfahren ermittelt. Dabei wird zu einer Reihe von Lötstellentemperaturen jeweils das Ausgangssignal des Infrarot-Strahlungspyrometers festgehalten. Somit ergibt sich eine Schar von Eichkurven zu verschiedenen Emissionsfaktoren ε.

Die gesamten Messungen gehen davon aus, daß nach vollzogener Kalibrierung des Infrarot-Strahlungspyrometers keine Änderung des Emissionsfaktors ε an der Lötstelle mehr erfolgt. Die Erfahrung hat gezeigt, daß das flüssige Lot für längere Zeit, aber auf jeden Fall für die Bearbeitungszeit, einen gleichbleibenden Emissionsfaktor ε hat.

Werden mehrere auf einem Werkstück vorhandene Lötstellen gleichzeitig temperaturkontrolliert mit Laserlicht bearbeitet, so wird die Intensitätsmodulation des Laserlichtes mit unterschiedlichen von Lötstelle zu Lötstelle wechselnden Frequenzen durchgeführt. Dies kann sowohl durch getrennte Modulation des in mehrere Strahlen aufgeteilten und jeweils auf eine Lötstelle gelenkten Laserlichtes eines einzigen Lasers, als auch durch Bestrahlung einer jeden Lötstelle mit einem eigenen Laser gegeschehen. Die Trennung der in den einzelnen Lötstellen induzierten Ultraschallsignale, deren Frequenzen mit der jeweiligen Modulationsfrequenz des eingestrahlten Laserlichtes übereinstimmt, erfolgt durch entsprechend schmalbandige Filterung dieser Signale mit Hilfe geeigneter frequenzselektiver Elemente. Lötstellen, die bezüglich der Aufnahme des Ultraschallsignales akustisch gekoppelt sind, können somit problemlos bearbeitet werden. Der Ultraschallsensor ist in diesem Fall zweckmäßigerweise ein Breitbandwandler. Bei der Bearbeitung hinreichend kleiner Lötstellen mit einem Lichtleistungsbedarf von maximal 1 W können beim derzeitigen Stand der Technologie bereits Halbleiterlaser (Laserdioden) eingesetzt werden. Dies bietet den besonderen Vorteil, daß in einfacher Weise ein breiter Frequenzbereich bezüglich der Intensitätsmodulation abgedeckt werden kann.

Der gebräuchlichste Anwendungsfall eines erfindungsgemäßen Verfahrens ist die Temperaturführung an der Lötstelle vom Aufschmelzen des Lotes bis zu einer vorgegebenen Arbeitstemperatur, bzw. bei zusätzlicher Verwendung eines IR-Strahlungspyrometers die Regelung der Lötstellentemperatur nach einem vorgegebenen Temperatur-Zeit-Verlauf. Typische Arbeitstemperaturen beim Weichlöten liegen bei ca. 250°C. Eine derartige Temperatur kann durch das beschriebene Verfahren auf ± 10°C genau eingestellt werden. Prinzipiell können Prozesse gesteuert oder geregelt werden, bei denen eine erfaßbare und auswertbare Menge an Infrarotstrahlung von der Prozeßstelle emittiert wird. Das gleiche Verfahren ist auch erfolgreich bei einem Hartlötprozeß bei ca. 700° C eingesetzt worden.

Der Temperaturbereich, innerhalb dessen der Abfall des Ultraschallsignales auftritt, ist sehr schmal und liegt bei maximal 3° C.

## Patentansprüche

1. Verfahren zur Führung des Temperaturverlaufes an Lötstellen beim Laserlöten mittels der Erfassung des Aufschmelzzeitpunktes des Lotes mit bekannter Schmelztemperatur, **dadurch gekennzeichnet,** daß das Erreichen der Schmelztemperatur durch die Auswertung eines durch die Bestrahlung der Lötstelle mit intensitätsmoduliertem Laserlicht erzeugten Ultraschallsignales erkannt wird, wobei das Ultraschallsignal durch einen oder mehrere an dem die Lötstelle enthaltenden Werkstück oder seiner Halterung angekoppelten Ultraschallsensor aufgenommen wird und das Erreichen der Schmelztemperatur durch einen damit verbundenen starken Abfall der Amplitude des Ultraschallsignales feststellbar ist.

2. Verfahren nach Anspruch 1, **dadurch gekennzeichnet**, daß im Anschluß an das Erreichen der Schmelztemperatur des Lotes eine vorgegebene Energiemenge mittels des Lasers nachgeliefert wird, um die Lötstelle auf eine bestimmte Arbeitstemperatur zu erwärmen.

3. Verfahren nach Anspruch 1, **dadurch gekennzeichnet,** daß
- die bis zum Erreichen der Schmelztemperatur des Lotes mittels des Lasers abgegebene Energiemenge ermittelt wird und
- eine daraus abgeleitete Energiemenge mittels des Lasers nachgeliefert wird, um die Lötstelle auf eine bestimmte Arbeitstemperatur zu erwärmen.

4. Verfahren nach einem der vorhergehenden Ansprüche, **dadurch gekennzeichnet,** daß mehrere auf einem Werkstück vorhandene und nicht gegenseitig schallisolierte Lötstellen gleichzeitig mit intensitätsmoduliertem Laserlicht mit jeweils unterscheidlicher Modulationsfrequenz bearbeitet werden, wobei das jeweils zugehörige Ultraschallsignal die entsprechende Modulationsfrequenz aufweist, somit die Ultraschallsignale den einzelnen Lötstellen zugeordnet werden können und der Temperaturverlauf an jeder Lötstelle einzeln regelbar ist.

## Claims

1. Method for guiding the temperature variation at soldering points during laser soldering by means of detecting the fusing instant of the solder, which has a known melting temperature, characterised in that the reaching of the melting temperature is detected by evaluating an ultrasonic signal generated by irradiating the soldering point using intensity-modulated laser light, the ultrasonic signal being picked up by one or more ultrasonic sensors coupled to the workpiece containing the soldering point or to its holder, and it being possible to determine the reaching of the melting temperature from a sharp drop bound up therewith in the amplitude of the ultrasonic signal.

2. Method according to Claim 1, characterised in that following the reaching of the melting temperature of the solder a prescribed quantity of energy is additionally supplied by means of the laser in order to heat the soldering point to a specific working temperature.

3. Method according to Claim 1, characterised in that
- the quantity of energy dissipated by means of the laser up to the reaching of the melting temperature of the solder is determined, and
- a quantity of energy derived therefrom is additionally delivered by means of the laser in order to heat the soldering point to a specific working temperature.

4. Method according to one of the preceding claims, characterised in that a plurality of soldering points present on a workpiece and not mutually sound-insulated are simultaneously processed using intensity-modulated laser light of different modulation frequency in each case, the respectively associated ultrasonic signal having the corresponding modulation frequency so that the ultrasonic signals can be assigned to the individual soldering points and the temperature variation can be individually controlled at each soldering point.

## Revendications

1. Procédé pour contrôler l'allure de la température au niveau de points de brasage lors du brasage par laser, moyennant la détection de l'instant de fusion de la brasure possédant une température de fusion connue, caractérisé par le fait que l'instant où la température de fusion est atteinte, est identifié au moyen de l'évaluation d'un signal ultrasonore produit par l'irradiation de la zone de brasage avec une lumière laser dont l'intensité est modulée, le signal ultrasonore étant enregistré par un ou par plusieurs capteurs à ultrasons couplés à la pièce à traiter comportant la zone de brasage, ou à son support, et l'instant où la température de fusion est atteinte est susceptible d'être déterminé sur la base d'une forte chute, qui y est liée, de l'amplitude du signal ultrasonore.

2. Procédé suivant la revendication 1, caractérisé par le fait que, lorsque la brasure a atteint la température de fusion, une quantité d'énergie prédéterminée est fournie en plus à l'aide du laser afin de chauffer la zone de brasage à une température de travail déterminée.

3. Procédé suivant la revendication 1, caractérisé par le fait que
- que l'on détermine la quantité d'énergie fournie à l'aide du laser pour que la brasure atteigne la température de fusion, et
- qu'une quantité d'énergie, qui en est dérivée, est fournie en plus à l'aide du laser de manière à chauffer la zone de brasage à une température de travail déterminée.

4. Procédé suivant l'une des revendications précédentes, caractérisé par le fait que plusieurs zones de brasage, qui sont présentes sur une pièce à traiter et ne sont pas isolées acoustiquement les unes par rapport aux autres, sont traitées simultanément avec des lumières laser modulées en intensité et possédant des fréquences de modulation respectivement différentes, le signal ultrasonore respectivement associé possédant la fréquence de modulation correspondante, et par conséquent les signaux ultrasonores peuvent être associés aux différentes zones de brasage et la variation de température dans chaque zone de brasage est réglable individuellement.
